Europäisches Patentamt

European Patent Office

Office européen des brevets

(19)

(11) Numéro de publication: **0 296 087**
**B1**

(12)

# FASCICULE DE BREVET EUROPEEN

(45) Date de publication du fascicule du brevet:
22.08.90

(51) Int. Cl.⁵: **F16F 9/22**

(21) Numéro de dépôt: 88440044.1

(22) Date de dépôt: 07.06.88

(54) Amortisseur à double action provoquant le laminage d'un fluide au passage d'un étranglement.

(30) Priorité: 11.06.87 FR 8708317

(43) Date de publication de la demande:
21.12.88 Bulletin 88/51

(45) Mention de la délivrance du brevet:
22.08.90 Bulletin 90/34

(84) Etats contractants désignés:
AT BE CH DE ES GB IT LI LU NL SE

(56) Documents cités:
FR-A- 2 583 844
GB-A- 242 547
GB-A- 615 549
GB-A- 2 123 522

PATENT ABSTRACTS OF JAPAN,
vol. 5, no. 112 (M-79)[784], 21 juillet 1988, page 31 M 79;
& JP-A-56 52 639 (MUTOU KOGYO K.K.) 11-05-1981

(73) Titulaire: FERCO INTERNATIONAL Usine de Ferrures de
Bâtiment Société à responsabilité limitée dite, 2, rue du
Vieux-Moulin Reding, F-57400 Sarrebourg(FR)

(72) Inventeur: Legrand, Jean Claude, 17, rue Division
Leclerc, F-57400 Reding(FR)
Inventeur: Prévot, Gérard, 39, rue de Herbitzheim,
F-57430 Willerwald(FR)

(74) Mandataire: Aubertin, François, Cabinet Lepage &
Aubertin Innovations et Prestations 4, rue de Haguenau,
F-67000 Strasbourg(FR)

## Description

L'invention concerne un amortisseur à double action provoquant le laminage d'un fluide au passage d'un étranglement pour amortir un mouvement.

Cette invention trouvera son application dans l'industrie en général, à chaque fois qu'il sera nécessaire d'amortir un quelconque mouvement d'une pièce par rapport à une autre.

Les amortisseurs, habituellement utilisés, notamment, dans le cadre de véhicules terrestres, se composent d'un cylindre fermé dans lequel coulisse un piston provoquant le laminage d'un fluide, ce piston étant solidiare d'une tige traversant l'une des extrémités dudit cylindre. Ainsi, selon la configuration des éléments en présence, la tige du piston et le cylindre de l'amortisseur sont rendus solidaires respectivement, d'une pièce mobile et d'une pièce fixe ou vice versa. Ces amortisseurs sont basés sur le principe de l'effet d'inertie que présente un fluide au passage d'un étranglement. Dans ce but, l'amortisseur est pourvu de deux chambres rendues communicantes par un conduit de faible diamètre, le déplacement du piston provoquant le transvasement du fluide d'une chambre à l'autre. Il existe de nombreuses variantes dans la configuration de ces amortisseurs, notamment des chambres contenant le fluide, ce dernier pouvant être, par ailleurs, soit liquide, soit gazeux. Ainsi, selon une variante le piston divise le logement du cylindre en deux chambres et comporte, en outre, une ou plusieurs conduites mettant en communication le fluide contenu dans ces dernières. Dans d'autres cas de figure, le cylindre se compose d'une double enveloppe contenant un fluide pouvant s'écouler dans le logement central du cylindre au travers d'un étranglement.

En raison de leur configuration, ces amortisseurs ne sont pas en mesure d'assurer le guidage du déplacement d'une pièce mobile par rapport à une pièce fixe. Ce guidage est généralement assuré par d'autres éléments de liaison reliant ladite pièce mobile à la pièce fixe.

Il est également connu des amortisseurs dont le piston est maintenu par deux tiges situées dans le prolongement l'une de l'autre et traversant chacune l'une des extrémités du cylindre. Fréquemment, dans ces conditions, les extrémités des deux tiges sont rendues solidaires de la pièce fixe, ce qui permet d'assurer le guidage de la pièce mobile par rapport à cette dernière, par le biais du cylindre. Cependant, on constate que ce guidage ne peut avoir lieu que sur des portées particulièrement réduites, notamment au niveau de l'ajustement piston-cylindre et au niveau des orifices usinés dans les flasques refermant les extrémités du cylindre, ces orifices servant de passage aux tiges reliées au piston. De plus, en raison de l'étanchéité qu'il est nécessaire d'assurer au niveau de chacune de ces portées de guidage, les efforts appliqués perpendiculairement aux cylindres et aux tiges du piston sont obligatoirement d'une intensité réduite.

La présente invention a pour but de remédier à ces inconvénients. L'invention, telle qu'elle est caractérisée dans les revendications, résout le problème consistant à créer un amortisseur à double action provoquant le laminage d'un fluide au passage d'un étranglement pour amortir un mouvement et, comportant, en combinaison, d'une part, un piston fixe et un cylindre fixe, coopérant tous deux, avec un élément mobile composé de deux parties, situées dans le prolongement l'une de l'autre, la partie supérieure étant munie d'un logement de forme cylindrique dans lequel est introduit ledit piston fixe et la partie inférieure empruntant la forme d'un piston coulissant dans ledit cylindre fixe, et, d'autre part, des moyens de communication du fluide contenu dans le logement de forme cylindrique et une chambre définie par la face interne et le fond du cylindre fixe et l'extrémité de la partie inférieure de l'élément mobile.

Les avantages obtenus grâce à cette invention consistent essentiellement en ceci que les portées de guidage de l'élément mobile de cet amortisseur par rapport, d'une part, au piston fixe et, d'autre part, au cylindre fixe, sont particulièrement importantes et permettent, de ce fait, d'augmenter les efforts appliqués perpendiculairement à l'ensemble.

Un autre avantage de la présente invention consiste en une réduction de l'encombrement de l'amortisseur, notamment au niveau de sa section. En effet, dans ce cas de figure, l'une des chambres contenant le fluide de laminage est formée par le cylindre fixe, alors que l'autre chambre, constituée par l'élément mobile, est située à l'extérieur et dans le prolongement dudit cylindre fixe. De ce fait, pour un même volume de fluide véhiculé, le diamètre du cylindre d'un amortisseur connu dans l'état de la technique est nécessairement supérieur au diamètre du cylindre ou de l'élément mobile de l'amortisseur conforme à l'invention.

L'invention est exposée ci-après plus en détail à l'aide de dessins représentant seulement un mode d'exécution.

La figure 1 représente une vue schématisée, en élévation et en coupe de l'amortisseur conforme à l'invention, l'élément mobile étant en position haute.

La figure 2 repésente une vue schématisée, en élévation et en coupe de l'amortisseur conforme à l'invention, l'élément mobile étant introduit au maximum dans le cylindre fixe.

Etant donné que ces deux figures représentent le même amortisseur dans deux positions différentes, il est évident que les mêmes références désigneront les mêmes éléments et qu'il sera indifférent de se reporter à l'une ou l'autre de ces deux figures.

L'amortisseur 1, conforme à l'invention, est à double action et basé sur le principe du laminage d'un fluide au passage d'un étranglement pour amortir un mouvement. Le fluide utilisé peut être soit liquide, soit gazeux et sera déterminé en fonction de l'intensité d'amortissement qu'il y a lieu d'atteindre. D'autres critères peuvent intervenir dans le choix de ce fluide. Ainsi, on préconise l'utilisation d'un gaz lorsqu'il s'agit de conférer à l'amortisseur les caractères d'un ressort sous certaines sollicitations.

Selon l'invention, l'amortisseur 1 est formé par la combinaison d'un piston fixe 2 et d'un cylindre fixe 3, tous deux coopérant avec un élément mobile 4. Ce dernier est disposé entre le piston fixe 2 et le cylindre fixe 3 et, à cet effet, il se compose de deux parties 5, 6 situées dans le prolongement l'une de l'autre.

La partie supérieure 5 de cet élément mobile 4 comporte un logement 7, de forme cylindrique, dans lequel est introduit le piston fixe 2. Contrairement, la partie inférieure 6 dudit élément mobile 4 emprunte la forme d'un piston apte à coulisser dans le cylindre fixe 3. Il est à noter que ce dernier comporte à son extrémité inférieure 8 un fond 9 de manière à définir, avec l'extrémité 10 de la partie inférieure 6 de l'élément mobile 4, une chambre 11 contenant le fluide liquide ou gazeux.

Pour le bon fonctionnement de cet amortisseur, il est important d'éviter un écoulement, vers l'extérieur, du fluide contenu dans la chambre 11. Dans ce but, on pourvoit l'extrémité inférieure 10 de la partie inférieure 6 de l'élément mobile 4 de moyens d'étanchéité 12, tels que joints, racleurs, segments ou autres, coopérant avec la face interne 13 du cylindre fixe 3. Quels que soient les moyens d'étanchéité 12 utilisés, ils doivent autoriser le coulissement de la partie inférieure 6 dans le cylindre fixe 3 avec un minimum de frottement pour éviter un effet parasite dans le fonctionnement de l'amortisseur 1.

Etant donné que le logement 7 de la partie supérieure 5 de l'élément mobile 4 contient également du fluide de laminage, il est nécessaire d'assurer une étanchéité, aussi efficace que dans le cadre cité ci-dessus, au niveau de l'ajustement coulissant du piston fixe 2 et dudit logement 7. Dans ce but, on munit l'extrémité inférieure 14 du piston fixe 2 de moyens d'étanchéité 12 coopérant avec la face interne 15 de ce logement 7.

En raison de son principe de fonctionnement, l'amortisseur 1 est pourvu de moyens de mise en communication 16 du logement 7 et de la chambre 11 autorisant le transvasement du fluide contenu dans cesd erniers. Ces moyens de mise en communication 16 peuvent être externes et constitués par une conduite (non représentée sur les différentes figures) reliant le logement 7 à la chambre 11. Dans ce cas, la partie supérieure 5 de l'élément mobile 4 et le cylindre fixe 3 comportent, chacun, dans leur paroi respective 17, 18, un orifice (non représenté) débouchant, respectivement, dans le logement 7 et la chambre 11 à proximité immédiate du fond (28, 9) de ces derniers. Sur ces orifices, servant de passage au fluide de laminage, est branchée la conduite citée ci-dessus.

Cependant, de tels moyens de mise en communication 16 externes risquent fort d'être encombrants dans certains cas d'utilisation de l'amortisseur 1. Pour remédier à cet inconvénient, la partie inférieure 6 de l'élément mobile 4 comporte, selon l'invention, les moyens de mise en communication 16 du fluide contenu dans le logement 7 et la chambre 11. Avantageusement, ces moyens de mise en communication 16 sont formés par un évidement central 19 réalisé dans la partie inférieure 6 de l'élément mobile 4 débouchant, d'une part, dans le logement 7 de la partie supérieure 5 et, d'autre part, dans la chambre 11 du cylindre fixe 3.

Il a été cité ci-dessus que le fonctionnement de l'amortisseur 1 est basé sur le principe du laminage d'un fluide au passage d'un étranglement. A cet effet, en réduisant suffisamment le diamètre interne 20 de l'évidement central 19, ce dernier peut constituer l'étranglement au travers duquel le fluide peut être transvasé soit du logement 7 dans la chambre 11 ou vice versa.

Cependant, il peut s'avérer, qu'en raison de la longueur 21 de la partie inférieure 6 de l'élément mobile 4, l'usinage de l'évidement central 19 de diamètre réduit soit particulièrement délicat. De ce fait, il peut être préférable de conférer à cet évidement central 19 un diamètre 20 plus conséquent, l'étranglement étant alors assuré par un orifice 22 de diamètre réduit, aboutant à l'extrémité inférieure de l'évidement central 19 et débouchant dans la chambre 11 du cylindre fixe 3. Cette configuration est avantageuse, notamment dans le cas où, suite à des essais, il est nécessaire de réajuster le diamètre de l'orifice 22 en fonction de la viscosité du fluide utilisé, des sollicitations appliquées à l'amortisseur 1 et de l'intensité d'amortissement qu'il convient d'obtenir.

Selon le mode de réalisation représenté dans les diffé rentes figures, le diamètre 23 du logement 7 et le diamètre 24 de la chambre 11 sont sensiblement identiques. Ceci permet d'éviter à l'amortisseur 1 de jouer le rôle d'un ressort au cours du déplacement de l'élément mobile 4.

Cependant, dans certains cas de figure, il peut s'avérer intéressant de conférer à l'amortisseur 1 de telles propriétés. Il suffit, dans ce but, de conférer au logement 7 et à la chambre 11 des diamètres 23, 24 différents.

La course de l'élément mobile 4 par rapport au piston fixe 2 et au cylindre fixe 3 dépend, d'une part, de la hauteur du logement 7 et de la longueur du piston fixe 2 et, d'autre part, de la hauteur de la chambre 11 et de la longueur de la partie inférieure 6 de l'élément mobile 4. Cette course de l'élément mobile 4 est également fonction de l'écart 25 existant entre le piston fixe 2 et le cylindre fixe 3. En raison du caractère variable de l'écart 25, l'amortisseur 1 présente une certain polyvalence et peut s'adapter à différents systèmes mécanique.

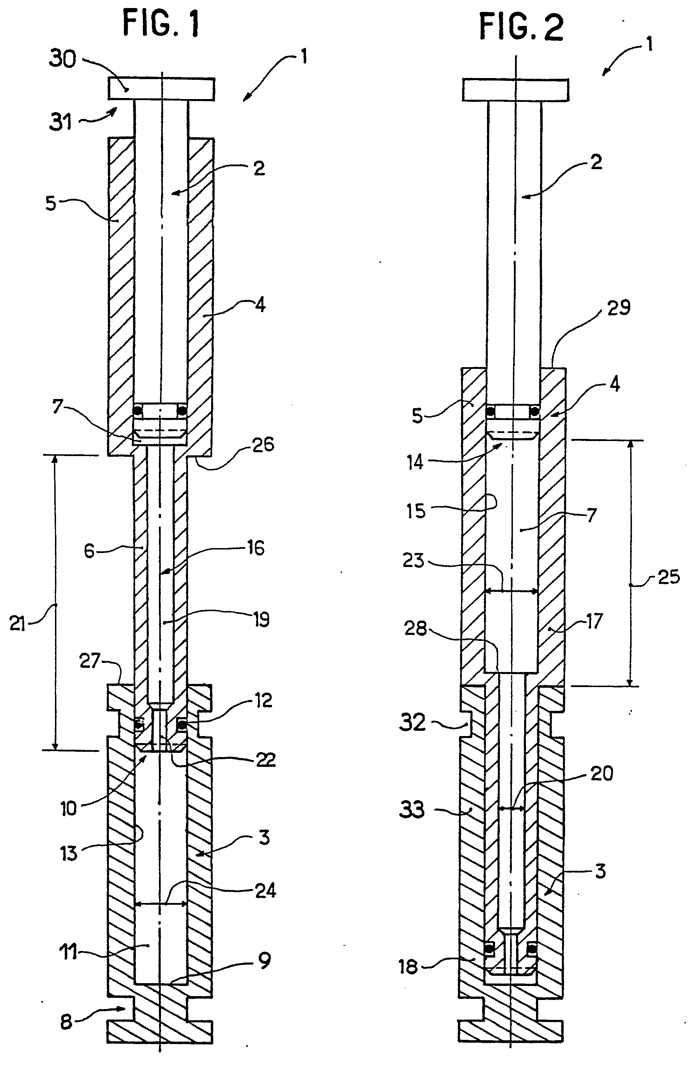

Les butées de fin de course de l'élément mobile 4 par rapport, d'une part, au piston fixe 2 et, d'autre part, au cylindre fixe 3, selon les fonctions attribuées à l'amortisseur 1, sont soit mécaniques, soit basées sur le principe de la compression du fluide. Ainsi, en modifiant le volume du logement 7 par rapport à celui de la chambre 11, les butées de fin de course dépendront de la compressibilité du fluide. Contrairement, selon le mode d'exécution représenté dans les différentes figures, les butées de fin de course sont du type mécanique. Ainsi, dans la figure 2, représentant l'élément mobile 4 en position basse, l'épaulement 26, délimitant la partie supérieure 5 de la partie inférieure 6 de l'élément mobile 4, vient en butée contre le chant supérieur 27 du cylindre fixe 3. Par ailleurs, dans la figure 1, l'élément mobile 4 est amené dans sa position haute et le fond 28 du logement 7 coopère avec l'extrémité inférieure 14 du piston fixe 2. Il peut également être envisagé de munir ce dernier, dans sa partie supérieure, d'un rebord coopérant avec le chant supérieur 29 de l'élément mobile 4 en fin de course haute.

En raison de la dissociation du logement 7 et de la chambre 11, l'amortisseur 1 peut présenter une section particulièrement réduite et s'adapter à des systèmes mécaniques de précision. Toutefois, on notera que cet amortisseur n'est nullement limité à ce domaine d'application.

En réalité, l'amortisseur 1, conforme à l'invention, peut être aisément intégré dans tout système mécanique, il suffit pour cela d'adjoindre au piston fixe 2, au cylindre fixe 3 et à l'élément mobile 4 des moyens de fixation appropriés.

Ainsi, dans le cadre du piston fixe 2, ces moyens de fixation peuvent être constitués par une embase 30 rapportée à son extrémité supérieure 31 et apte à coopérer avec des éléments de maintien quelconques du système mécanique auquel l'amortisseur 1 doit s'intégrer. Il est bien évident qu'il est possible de remplacer l'embase 30 par un embout fileté, cette solution étant fréquemment adoptée dans le cas d'amortisseurs utilisés pour des véhicules terrestres.

En ce qui concerne les moyens de fixation du cylindre fixe 3, ceux-ci sont formés, selon le mode de réalisation représenté dans les figures, par des gorges périphériques 32 usinées sur la face externe 33 dudit cylindre fixe 3 et dans lesquelles sont engagés des moyens de préhension ou de clipage. Tout comme précédemment, on peut substituer à ces gorges périphériques 32, un embout fileté situé dans le prolongement et à l'extrémité inférieure 8 du cylindre fixe 3.

Plus généralement, qu'il s'agisse du piston fixe 2, du cylindre fixe 3 ou de l'élément mobile 4, les moyens de fixation pourront être aisément déterminés par l'Homme de l'Art en fonction du système mécanique dans lequel doit être inséré l'amortisseur 1.

**Revendications**

1. Amortisseur à double action provoquant le laminage d'un fluide au passage d'un étranglement pour amortir un mouvement, caractérisé par le fait qu'il comporte, en combinaison, d'une part, un piston fixe (2) et un cylindre fixe (3), coopérant, tous deux, avec un élément mobile (4) composé de deux parties (5, 6), situées dans le prolongement l'une de l'autre, la partie supérieure (5) étant munie d'un logement (7), de forme cylindrique, dans lequel est introduit ledit piston fixe (2) et la partie inférieure (6) empruntant la forme d'un piston coulissant dans ledit cylindre fixe (3), et, d'autre part, des moyens de communication (16) du fluide contenu dans le logement (7) et une chambre (11) définie par la face interne (13) et le fond (9) du cylindre fixe (3) et l'extrémité (10) de la partie inférieure (6) de l'élément mobile (4).

2. Amortisseur à double action selon la revendication 1, caractérisé en ce que les moyens de communication (16) sont du type externe, formés par une conduite reliée, d'une part, à un orifice usiné dans la paroi (17) de la partie supérieure (5) de l'élément mobile (4) et débouchant à proximité immédiate du fond (28) du logement (7) et, d'autre part, à un orifice pratiqueé dans la paroi (18) du cylindre fixe (3) et débouchant dans la chambre (11) immédiatement au-dessus du fond 9 de cette dernière, soit la conduite, soit l'un des orifices, soit l'ensemble conduite-orifices constituant l'étranglement provoquant le laminage du fluide lors de son écoulement.

3. Amortisseur à double action selon la revendication 1, caractérisé en ce que les moyens de communication (16) sont constitués par un évidement central (19) usiné dans la partie inférieure (6) de l'élément mobile (4) et débouchant, d'une part, dans le logement (7) de la partie supérieure (5) et, d'autre part, dans la chambre (11) du cylindre fixe (3), l'étranglement au travers duquel le fluide est amené à s'écouler, provoquant ainsi son laminage, étant constitué par ledit évidement central (19).

4. Amortisseur à double action selon la revendication 1, caractérisé en ce que les moyens de communication (16) sont constitués par un évidement central (19) réalisé dans la partie inférieure (6) de l'élément mobile (4), ledit évidement central (19) débouchant dans le logement (7) de la partie supérieure (5) et aboutant, à son extrémité inférieure à un orifice (22) de diamètre réduit débouchant dans la chambre (11) du cylindre fixe (3), ledit orifice (22) formant l'étranglement provoquant le laminage du fluide lors de sont transvasement du logement (7) dans la chambre (11) ou vice versa.

5. Amortisseur à double action selon la revendication 1, caractérisé en ce que le diamètre (23) du logement (7) et le diamètre (24) de la chambre (11) sont sensiblement identiques.

6. Amortisseur à double action selon la revendication 1, caractérisé en ce que le diamètre (23) du logement (7) et le diamètre (24) de la chambre (11) sont différents.

7. Amortisseur à double action selon la revendication 1, caractérisé en ce que le piston fixe (2) et la partie inférieure (6) de l'élément mobile (4) comportent à leur extrémité inférieure respectivement (14) et (10), des moyens d'étanchéité (12) tels que joints, racleurs, segments ou autres, coopérant respectivement, avec la face interne (15) du logement (7) et la face interne (13) de la chambre (11) pour éviter les fuites de fluide vers l'extérieur.

8. Amortisseur à double action selon les revendications 1 et 2, caractérisé par le fait que la course de l'élément mobile (4) par rapport au piston fixe (2) et au cylindre fixe (3) dépend, d'une part, de la hauteur du logement (7) et de la longueur du piston fixe (2) et, d'autre part, de la hauteur de la chambre (11) et de la longueur (21) de la partie inférieure (6) de l'élément mobile (4), cette course de ce dernier étant, en outre, fonction de l'écart (25) existant entre ledit piston (2) et le cylindre fixe (3).

**Patentansprüche**

1. Doppelt wirkender Stoßdämpfer, der die Drosselung einer Flüssigkeit beim Durchströmen einer Verengung hervorruft, um eine Bewegung zu dämpfen, dadurch gekennzeichnet, daß er in Kombination einerseits einen feststehenden Kolben (2) und einen feststehenden Zylinder (3), die beide mit einem beweglichen Element (4) zusammenwirken, das aus zwei in gegenseitiger Verlängerung angeordneten Teilen (5, 6) besteht, von denen der obere Teil (5) mit einer Aufnahme (7) mit zylindrischer Gestalt ausgestattet ist, in welche der feststehende Kolben (2) eingeführt ist, und der untere Teil (6) in Gestalt eines Kolbens ausgebildet ist, der in dem feststehenden Zylinder (3) gleitet, und anderseits Strömungsverbindungsmittel (16) für in der Aufnahme (7) und in einer Kammer (11) enthaltene Flüssigkeit aufweist, wobei die Kammer von der Innenseite (13) und dem Boden (9) des feststehenden Zylinders (3) und dem Ende (10) des unteren Teiles (6) des beweglichen Elementes (4) gebildet ist.

2. Doppelt wirkender Stoßdämpfer nach Anspruch 1, dadurch gekennzeichnet, daß die Strömungsverbindungsmittel (16) vom externen Typ und durch eine Leitung gebildet sind, welche einerseits an eine Öffnung, die in der Wand (17) des oberen Teiles (5) des beweglichen Elementes (4) ausgebildet ist und in unmittelbarer Nähe des Bodens (28) der Aufnahme (7) ausmündet, und anderseits an eine Öffnung angeschlossen ist, die in der Wand (18) des feststehenden Zylinders (3) ausgebildet ist und in die Kammer (11) unmittelbar oberhalb des Bodens (9) der letzteren ausmündet, wobei entweder die Leitung oder eine der Öffnungen oder die Anordnung aus Leitung-Öffnungen die Verengung bildet, welche die Drosselung der Flüssigkeit bei ihrem Durchströmen hervorruft.

3. Doppelt wirkender Stoßdämpfer nach Anspruch 1, dadurch gekennzeichnet, daß die Strömungsverbindungsmittel (16) durch eine zentrale Aussparung (19) gebildet sind, die im unteren Teil (6) des beweglichen Elementes (4) ausgebildet ist und einerseits in die Aufnahme (7) des oberen Teiles (5) sowie anderseits in die Kammer (11) des feststehenden Zylinders (3) ausmündet, wobei die Verengung, welche von der Flüssigkeit durchströmt wird und auf diese Weise deren Drosselung bewirkt, durch die zentrale Aussparung (19) gebildet ist.

4. Doppelt wirkender Stoßdämpfer nach Anspruch 1, dadurch gekennzeichnet, daß die Strömungsverbindungsmittel (16) durch eine zentrale Aussparung (19) gebildet sind, die im unteren Teil (6) des beweglichen Elementes (4) ausgebildet ist, wobei diese zentrale Aussparung (19) in die Aufnahme (7) des oberen Teiles (5) ausmündet und an ihrem unteren Ende an eine Durchtrittsöffnung (22) reduzierten Durchmessers angrenzt, welche in die Kammer (11) des feststehenden Zylinders (3) ausmündet, wobei die Durchtrittsöffnung (22) die Verengung bildet, welche die Drosselung der Flüssigkeit bei ihrem Übertritt von der Aufnahme (7) in die Kammer (11), oder umgekehrt, hervorruft.

5. Doppelt wirkender Stoßdämpfer nach Anspruch 1, dadurch gekennzeichnet, daß der Durchmesser (23) der Aufnahme (7) und der Durchmesser (24) der Kammer (11) im wesentlichen identisch sind.

6. Doppelt wirkender Stoßdämpfer nach Anspruch 1, dadurch gekennzeichnet, daß der Durchmesser (23) der Aufnahme (7) und der Durchmesser (24) der Kammer (11) verschieden sind.

7. Doppelt wirkender Stoßdämpfer nach Anspruch 1, dadurch gekennzeichnet, daß der feststehende Kolben (2) und der untere Teil (6) des beweglichen Elementes (4) an ihrem unteren Ende (14) bzw. (10) Dichtungsmittel (12) aufweisen, wie Packungen, Abstreifringe, Kolbenringe od.dgl., die mit der Innenseite (15) der Aufnahme (7) und der Innenseite (13) der Kammer (11) zusammenwirken, um Leckströme der Flüssigkeit nach außen zu verhindern.

8. Doppelt wirkender Stoßdämpfer nach den Ansprüchen 1 und 2, dadurch gekennzeichnet, daß der Hub des beweglichen Elementes (4) bezüglich des feststehenden Kolbens (2) und des feststehenden Zylinders (3) einerseits von der Höhe der Aufnahme (7) und der Länge des feststehenden Kolbens (2) und anderseits von der Höhe der Kammer (11) und der Länge (21) des unteren Teiles (6) des beweglichen Elementes (4) abhängt, wobei der Hub des letzteren ferner eine Funktion des Abstandes (25) zwischen dem Kolben (2) und dem feststehenden Zylinder (3) ist.

## Claims

1. Bidirectionally working shock absorber, causing throttling of a fluid passing a throttle, to absorb a movement, characterized in that it comprises, in combination, on the one hand, a fixed piston (2) and a fixed cylinder (3), both co-operating with a moving element (4) comprised of two parts (5, 6) located in the extension of each other, the upper part (5) being provided with a cylindrically shaped housing (7) into which is engaged said fixed piston (2) and the lower part (6) taking the shape of a piston sliding in said fixed cylinder (3), and, on the other hand, communication means (16) for the fluid contained in the cylindrically shaped housing (7) and a chamber (11) defined by the inner face (13) and the bottom (9) of the fixed cylinder (3) and the end (10) of the lower part (6) of the moving element (4).

2. Bidirectionally working shock absorber according to claim 1, characterized in that the communication means (16) are of the external type, formed by a conduit connected, on the one hand, to an opening machined in the wall (17) of the upper part (5) of the moving part (4) and ending into the immediate proximity of the bottom (28) of the housing (7) and, on the other hand, to an opening provided in the wall (18) of the fixed cylinder (3) and ending into the chamber (11) immediately above the bottom (9) of same, either the conduit or one of the openings or the conduit-opening as a whole forming the throttle causing the throttling of the fluid during its flowing.

3. Bidirectionally working shock absorber according to claim 1, characterized in that the communication means (16) are formed by a central recess (19) machined in the lower part (6) of the moving element (4) and ending, on the one hand, into the housing (7) of the upper part (5) and, on the other hand, into the chamber (11) of the fixed cylinder (3), the throttle through which the fluid is caused to flow, thus causing its throttling, being formed by said central recess (19).

4. Bidirectionally working shock absorber according to claim 1, characterized in that the communication means (16) are formed by a central recess (19) machined in the lower part (6) of the moving element (4), said central recess (19) ending into the housing (7) of the upper part (5) and joining, at its lower end, a reduced-diameter opening (22) ending into the chamber (11) of the fixed cylinder (3), said opening (22) forming the throttle causing the throttling of the fluid during its transfer from the housing (7) into the chamber (11) or vice-versa.

5. Bidirectionally working shock absorber according to claim 1, characterized in that the diameter (23) of the housing (7) and the diameter (24) of the chamber (11) are substantially identical.

6. Bidirectionally working shock absorber according to claim 1, characterized in that the diameter (23) of the housing (7) and the diameter (24) of the chamber (11) are different.

7. Bidirectionally working shock absorber according to claim 1, characterized in that the fixed piston (2) and the lower part (6) of the moving element (4) comprise at their lower end, respectively (14) and (10), sealing means (12), such as seals, scrapers, rings or the like, co-operating with the inner face (15) of the housing (7) and the inner face (13) of the chamber (11), respectively, in order to avoid the fluid escapes to outside.

8. Bidirectionally working shock absorber according to claims 1 and 2, characterized in that the stroke of the moving element (4) with respect to the fixed piston (2) and the fixed cylinder (3) depends, on the one hand, on the height of the housing (7) and the length of the fixed piston (2) and, on the other hand, on the height of the chamber (11) and the length (21) of the lower part (6) of the moving element (4), this stroke of this latter depending, furthermore, on the gap (25) existing between the fixed piston (2) and the fixed cylinder (3).

EP 0 296 087 B1

FIG. 1    FIG. 2